# EUROPEAN PATENT APPLICATION

(11) **EP 4 589 581 A1**
(43) Date of publication of application: **23.07.2025**
(21) Application number: 24794329.3
(22) Date of filing: 25.10.2024
(51) Int. Cl.: G09G 3/32, G09G 5/10

(54) **MODULAR DISPLAY DEVICE**

(30) Priority: 04.12.2023 KR 20230173596
(71) Applicant: Samsung Electronics Co., Ltd., Gyeonggi-do 16677 (KR)
(72) Inventor: LEE, Gwangho, Suwon-si Gyeonggi-do 16677 (KR); KIM, Sangwon, Suwon-si Gyeonggi-do 16677 (KR)
(74) Representative: Appleyard Lees IP LLP
(86) International application number: PCT/KR2024/016479
(87) International publication number: WO 2025/121659

(57) **Abstract**

A modular display device is disclosed. The modular display device includes a plurality of display modules, an interface, at least one driver IC arranged on each of the display modules, memory, and a processor. The processor is configured to, based on data for characteristic values for each line of the driver IC being input through the interface, normalize the characteristic values for each of the lines, obtain correction data for each of the lines of the driver IC based on the normalized data, and adjust the sizes of electric signals for each of the lines of the at least one driver IC.

## Description

### [Technical Field]

The disclosure relates to a modular display devices and related methods.

### [Background Art]

Recently, as electronic technologies advance, various electronic display devices have been developed. In particular, recently, a so-called modular display device that provides one screen made up from a plurality of coupled display modules is being developed. Compared to displaying an image on a screen that uses one display module, a modular display device can give visual satisfaction to a user as it can display the image at a larger size on the larger screen.

Conventional modular display devices are often used in lobbies or on exterior walls, etc. of large buildings. These applications are well suited to such display devices when the distance between pixels on the display modules, also referred to as the pixel pitch, is large. However, recently, in order that a modular display device can also be used in a meeting room or a general home, efforts have been made to increase the integration density of sub-pixel LEDs by reducing distances between pixels as well as reducing the spacing interval between each display module in a modular display device.

However, a problem arises, with noise, in vertical line form, being generated due to differences in characteristics of driver ICs, etc.

### [Detailed Description of the Invention]

### [Technical Solution]

According to the disclosure, a modular display device includes a plurality of display modules, an interface, at least one driver IC arranged on each of the plurality of display modules, memory, and a processor.

The processor may, based on data for characteristic values for each line of the driver IC being input through the interface, store the data in the memory, and normalize the characteristic values for each of the lines in a predetermined range, obtain gains for each of the lines of the driver IC based on the normalized data, and adjust the sizes of electric signals for each of the lines of the driver IC by using the gains for each of the lines, and the driver IC may apply the electric signals of the adjusted sizes to LED lines of each of the plurality of display modules.

A method for removing noise in a modular display device including a plurality of display modules according to at least one embodiment of the disclosure includes the steps of, based on data for characteristic values for each line of at least one driver IC arranged on each of the plurality of display modules being input, storing the data, normalizing the characteristic values for each of the lines in a predetermined range, obtaining gains for each of the lines of the driver IC based on the normalized data, and adjusting the sizes of electric signals for each of the lines of the driver IC by using the gains for each of the lines, and applying the electric signals of the adjusted sizes to LED lines of each of the plurality of display modules by the driver IC.

According to at least one embodiment of the disclosure, in a non-transitory computer-readable storage medium storing computer instructions that, when executed by a processor of a modular display device including a plurality of display modules, cause the modular display device perform operations, the operations include the steps of receiving inputs of current values for each line of a plurality of driver ICs arranged on each of the plurality of display modules, normalizing the current values for each of the lines in a predetermined range, obtaining gains for each of the lines of the plurality of driver ICs based on the normalized data, and adjusting the sizes of currents for each of the lines of the plurality of driver ICs by using the gains for each of the lines.

### [Description of Drawings]

FIG. 1 is a perspective view schematically illustrating a modular display device;
FIG. 2 is a block diagram for illustrating a configuration of a modular display device according to an embodiment;
FIG. 3 is a diagram illustrating a configuration of a display module according to an embodiment;
FIG. 4 is a diagram for illustrating an operation of a display module comprising four driver ICs;
FIG. 5 is a diagram for illustrating in detail an operation of each driver IC of a display module;
FIG. 6 is a diagram for illustrating a normalization method;
FIG. 7 is a diagram for illustrating a configuration of a processor for removing noise;
FIG. 8 is a diagram for illustrating a method of removing a noise in vertical line form; and
FIG. 9 is a flow chart for illustrating a method of removing noises in a modular display device, according to an embodiment.

### [Mode for Invention]

As terms used in the various embodiments of the disclosure, general terms that are currently used widely were selected as far as possible, in consideration of the functions described in the disclosure. However, the terms may vary depending on the intention of those skilled in the art who work in the pertinent field, previous court decisions, or emergence of new technologies, etc. Also, in particular cases, there may be terms that were designated by the applicant on his own, and in such cases, the meaning of the terms will be described in detail in the relevant descriptions in the disclosure. Accordingly, the terms used in the disclosure should be defined based on the meaning of the terms and the overall content of the disclosure, but not just based on the names of the terms.

Also, in the disclosure, expressions such as "have," "may have," "include," and "may include" denote the existence of such characteristics (e.g.: elements such as numbers, functions, operations, and components), and do not exclude the existence of additional characteristics.

In addition, the expression "at least one of A and/or B" should be interpreted to mean any one of "A" or" B" or "A and B."

Further, the expressions "first," "second," and the like used in the disclosure may be used to describe various elements regardless of any order and/or degree of importance. Also, such expressions are used only to distinguish one element from another element, and are not intended to limit the elements.

Meanwhile, the description in the disclosure that one element (e.g.: a first element) is "(operatively or communicatively) coupled with/to" or "connected to" another element (e.g.: a second element) should be interpreted to include both the case where the one element is directly coupled to the another element, and the case where the one element is coupled to the another element through still another element (e.g.: a third element).

Also, singular expressions include plural expressions, unless defined obviously differently in the context. Further, in the disclosure, terms such as "include" or "consist of" should be construed as designating that there are such characteristics, numbers, steps, operations, elements, components, or a combination thereof described in the specification, but not as excluding in advance the existence or possibility of adding one or more of other characteristics, numbers, steps, operations, elements, components, or a combination thereof.

In addition, in the disclosure, "a module" or "a part" performs at least one function or operation, and may be implemented as hardware or software, or as a combination of hardware and software. Also, a plurality of "modules" or "parts" may be integrated into at least one module and implemented as at least one processor (not shown), except "a module" or "a part" that needs to be implemented as specific hardware.

Further, in the disclosure, the term "user" may refer to a person who uses an electronic device or a device used by the person.

Hereinafter, an embodiment of the disclosure will be described in more detail with reference to the accompanying drawings.

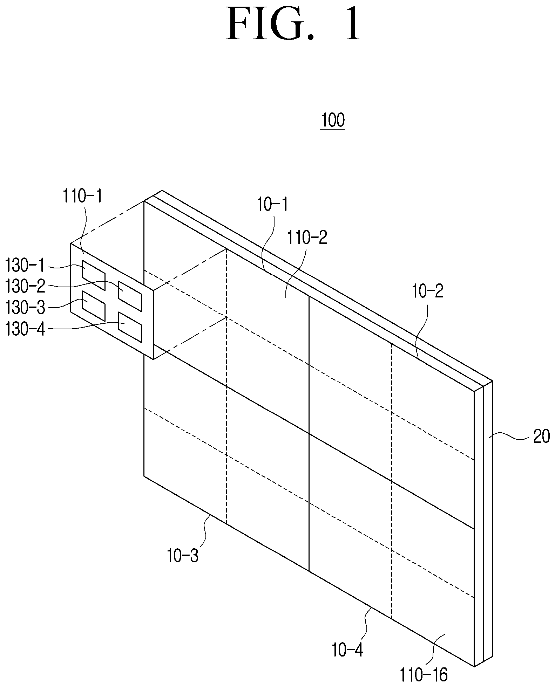

FIG. 1 is a perspective view schematically illustrating a modular display device.

A modular display device means a device that provides a large screen by using a plurality of display modules. A modular display device may be implemented as a video wall, a large format display "LFD", digital signage, a digital information display "DID", etc. A modular display device may alternatively be referred to as various names such as an integrated display device, a multi display device, etc., but it will be described as a modular display device in the disclosure.

According to FIG. 1, a modular display device 100 includes a plurality of display devices 10-1 - 10-4, and each display device 10-1 - 10-4 also includes a plurality of display modules 110-1 - 110-n. Each display device 10-1 - 10-4 may be coupled with each other and constitute one display panel. Each display device 10-1 - 10-4 may alternatively be referred to as a sub-screen or a cabinet. Each display device 10-1 - 10-4 may be coupled to a base plate 20 and arranged to be adjacent to each other.

The base plate 20 is a component for electrically coupling with each display device 10-1 - 10-4 and supporting them. The base plate 20 may be fixed to an environment wherein the modular display device 100 will be installed, for example, an exterior wall or an inner wall, etc. of a building by various kinds of fastening structures (not shown). The size and the form of the base plate 20 may be manufactured to correspond to the entire size and form of the modular display device 100. The base plate 20 may alternatively be referred to as various names such as a docking station, a supporting element, a connecting element, etc., these being generally described as the base plate 20 in this disclosure.

FIG. 1 is a case wherein four display devices 10-1 - 10-4 in total are coupled and implement one modular display device 100, and each display device 10-1 - 10-4 also includes four display modules, and illustrates a state wherein 16 display modules 110-1 - 110-n in total are arranged in a matrix form having four rows and four columns. However, the modular display device 100 can be implemented in various resolutions, sizes, and forms according to its installation location or purpose of use, use environment, etc., and accordingly, the number and the coupling or arrangement form of the display devices 10-1 - 10-4 and the display modules 110-1 - 110-n may also vary in diverse ways.

Also, in FIG. 1, it is illustrated and explained that each display module 110-1 - 110-n is grouped in a specific number and constitute one display device 10-1 - 10-4, and each display device 10-1 - 10-4 is connected to the base plate 20 and constitutes one modular display device 100, but other embodiments are also envisaged. That is, the modular display device 100 may not be divided in a plurality of display devices, but the plurality of display modules 110-1 - 110-n may directly be connected to the base plate 20 and constitute one modular display device 100.

On each display module 110-1 - 110-n, at least one driver IC is arranged. In FIG. 1, a state wherein four driver ICs 130-1 - 130-4 are arranged on the rear surface of each display module 110-1 - 110-n is illustrated, but other embodiments are also envisaged, and one driver IC or driver ICs in other numbers may be arranged according to the sizes and the types of the display modules. Also, in FIG. 1, a case wherein the four driver ICs 130-1 - 130-4 are arranged in a form of a 2*2 matrix is illustrated, but the four driver ICs 130-1 - 130-4 may also be arranged side by side in a direction of a horizontal line or a vertical line.

Each driver IC arranged on each display module 110-1 - 110-n is configured to drive pixels connected to the driver IC from among the entire set of pixels of the corresponding display module. As in FIG. 1, in case the plurality of driver ICs 130-1 - 130-4 are arranged in one display module 110-1, each driver IC 130-1 - 130-4 is configured to drive the plurality of pixels in the display module 110-1 by dividing the pixels for each line.

As in FIG. 1, in cases with four driver ICs 130-1 - 130-4 in total, each driver IC 130-1 - 130-4 may divide the display module 110-1 in four areas, and be responsible for driving of LED lines in each of the areas. An LED line means a line wherein a plurality of LEDs are electrically connected, and may alternatively be referred to as a line or a channel.

The magnitude of currents applied to the LED lines allotted to each driver IC 130-1 - 130-4 should be identical, within an error range. In this disclosure, the feature of being allotted to each driver IC 130-1 - 130-4 means that the LED lines are connected to each driver IC.

However, even if currents of the samemagnitude are provided, within an error range, there may be a fine difference in the current for each of the LED lines. That is, in a manufacturing process of a driver IC, current deviation for each line within an error range may be generated. Such a current deviation for each line may be generated in a consistent manner for driver ICs manufactured by the same company. Noise due to such a current deviation for each line may be difficult identify with the naked eye in a small display device. Even if noise checked using a camera in a manufacturing process of a device, the noise may not be recognized by the camera well. Accordingly, there is a problem that correction is difficult.

In the case of the modular display device 100, a plurality of display modules are coupled with one another and provide one large screen. Thus, if currents that are slightly bigger or smaller than the currents of comparable LED lines are applied to some LED lines, noise generated in each display module, the noise can be identified with the naked eye in the large screen. For example, in case the LED lines are arranged in a vertical line, noises in vertical line form may be identified in the large screen.

In the modular display device in FIG. 1, for removing such noise, characteristic values for each line of the driver IC may be used. The characteristic values for each line may include data regarding current values output for each LED line connected to the driver IC or differences of the current values. That is, in case the same control signal was input into the driver IC, the size of electric signals (e.g., currents or voltages) output from the driver IC to each LED line should be the same, but there may be a fine difference within the error range/tolerance in the actual product. Accordingly, data regarding actual output values that were precisely measured may be provided to the modular display device as characteristic values for each line.

Data regarding current values for each line may be obtained at a manufacturing company of a modular display device, etc. by directly measuring the sizes of currents applied from the driver IC to each LED line, or information on the specification of a driver IC product may be received from a manufacturing company of a driver IC, and the data may be obtained from the information.

A method for removing noises by using data regarding characteristic values for each line in a modular display device will be described in detail below.

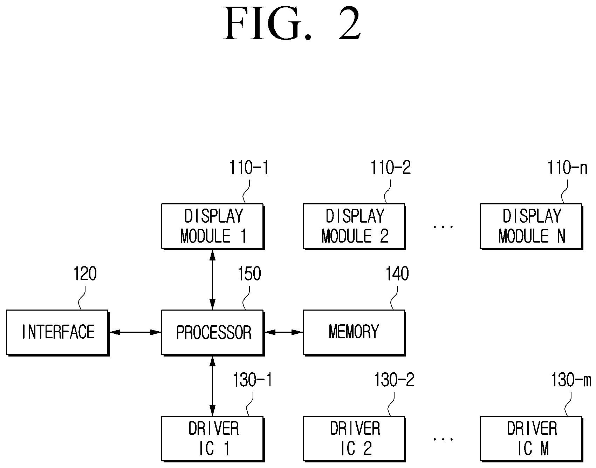

FIG. 2 is a block diagram for illustrating a configuration of a modular display device according to an embodiment of the disclosure.

According to FIG. 2, the modular display device 100 includes a plurality of display modules 110-1 - 110-n, an interface 120, a plurality of driver ICs 130-1 - 130-m, memory 140, and a processor 150. However, the modular display device 100 may be implemented in a form with some components are omitted, or implemented in a form wherein other components are further included.

The plurality of display modules 110-1 - 110-n are components for displaying various kinds of image on a display screen. As illustrated in FIG. 1, the plurality of display modules 110-1 - 110-n may form the exterior of the modular display device 100, grouped in a specific number and constituting a plurality of display devices, and being coupled to the base plate 20 in that state, or in a form wherein the plurality of display modules 110-1 - 110-n are directly coupled to the base plate 20. The plurality of display modules 110-1 - 110-n may have the same components, and thus the explanation below is provided based on one display module 110.

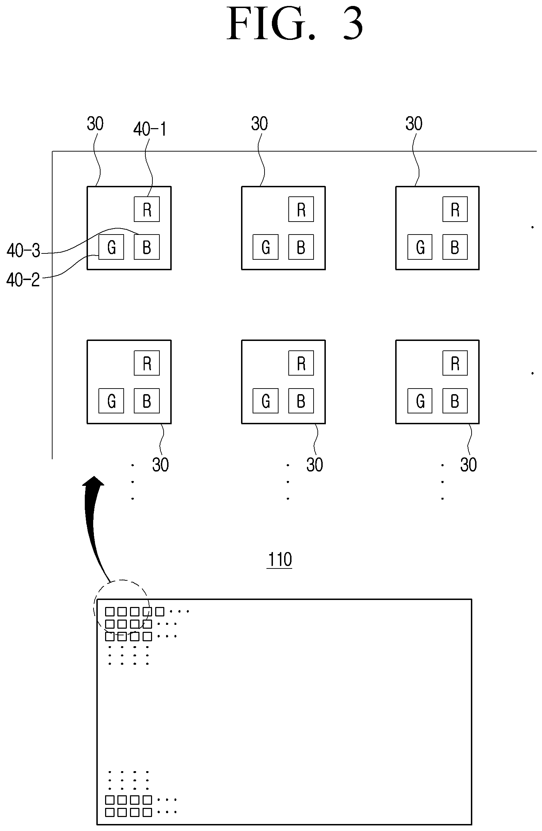

FIG. 3 illustrates an example of the configuration of the display module 110.

Referring to FIG. 3, the display module 110 may include a plurality of pixels 30 arranged in a matrix form. Each pixel 30 includes a plurality of sub-pixels 40-1, 40-2, 40-3. The plurality of sub-pixels 40-1, 40-2, 40-3 includes a red, "R", sub-pixel 40-1, a green. "G", sub-pixel 40-2, and a blue, "B", sub-pixel 40-3.

The R sub-pixel 40-1 includes an LED emitting a red light, The G sub-pixel 40-2 includes an LED emitting a green light, and the B sub-pixel 40-3 includes an LED emitting a blue light.

Each LED may be implemented as a standard LED, but the disclosure is not necessarily limited thereto, and each LED may be implemented as a so-called micro LED having a size of 100µm or smaller.

Each sub-pixel 40-1, 40-2, 40-3 may include pixel circuitry for driving the LEDs. The pixel circuitry may be provided for each LED. The pixel circuitry may consist of a transistor, etc., and may be formed on a thin film transistor, "TFT", layer of the display module 110. The pixel circuitry is electrically connected to an LED, and is configured to provide a current to the LED.

In FIG. 3, a case wherein the sub-pixels 40-1, 40-2, 40-3 are arranged in an L shape of which left and right sides were reversed in one pixel area is illustrated, but in other embodiments the R, G, B sub-pixels 40-1, 40-2, 40-3 may be arranged in a row or arranged in other various forms inside a pixel area. Also, the FIG. 3 explanation is based on an example wherein three kinds of sub-pixels constitute one pixel. However, in other embodiments, four kinds of sub-pixels such as R, G, B, and white, "W", may constitute one pixel.

The driver ICs 130-1 - 130-m are components for driving the pixels of each display module. At least one of the driver ICs 130-1 - 130-m is arranged on each display module 110-1 - 110-n.

In case four driver ICs are arranged on one display module as in FIG. 1, each driver IC may drive the an allotted sub set of LED lines from among the entire arrangement of LED lines inside one display module.

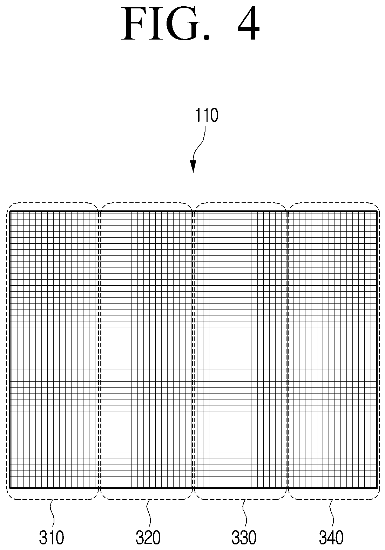

FIG. 4 is a diagram for illustrating an operation of a display module wherein four driver ICs are arranged.

According to FIG. 4, the display module 110 is divided into four areas, referred to as first, second, third and fourth areas respectively 310, 320, 330, 340. Here, the pixels included in the first area 310 are configured to be driven by the first driver IC 130-1, the pixels included in the second area 320 are configured to be driven by the second driver IC 130-2, the pixels included in the third area 330 are configured to be driven by the third driver IC 130-3, and the pixels included in the fourth area 340 are configured to be driven by the fourth driver IC 130-4.

Each driver IC 310 - 340 is configured to adjust the sizes of voltages or currents applied to the pixel circuitry connected to each LED according to control by the processor 150.

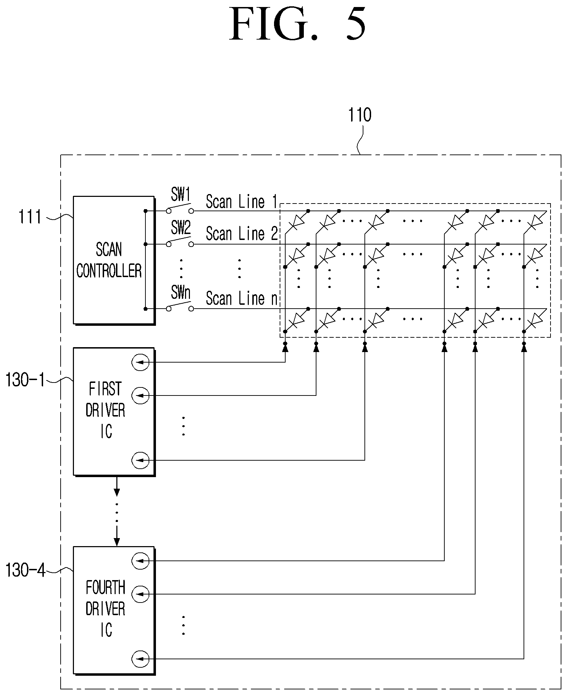

FIG. 5 is a diagram for illustrating in detail an operation of each driver IC arranged on a display module.

According to FIG. 5, inside the display module 110, a scan controller 111 and a plurality of driver ICs 130-1 - 130-4 are included.

The scan controller 111 is configured to sequentially turn on a plurality of scan lines, that is Scan line 1 to Scan line n, during a time section corresponding to an image frame. The plurality of scan lines are lines for connecting each of the plurality of LEDs and the scan controller 111. If the LED lines allotted to the driver ICs are vertical lines, the scan lines may be horizontal lines connected in a direction perpendicular thereto, so the connected directions may vary from each other.

A time section corresponding to an image frame means the time during which one image frame is displayed. For example, in case the frame rate is 60Hz, one image frame may be displayed during one sixtieth of a second, equivalent to 0.016 second. However, this is merely an example, and a time section corresponding to an image frame may be based on a different frame rate, and/or may include a plurality of sub-frame sections. For example, a time section corresponding to one image frame may include 64 sub-frame sections. In this case, the scan controller 111 may sequentially turn on a plurality of scan lines during one sub-frame section, e.g. 260.4 usec,, and turn on each of the plurality of scan lines 64 times during the time section corresponding to the image frame.

The scan controller 111 may divide one sub-frame section into n sections, according to the number of the plurality of scan lines, and turn on the switch of the Scan line 1 during the first section T1, and thereby control the LEDs corresponding to the Scan line 1 to emit lights. The scan controller 111 turns off the switches of the remaining scan lines, Scan line 2 to Scan line n, during the first section T1.

When the first section T1 ends and the second section T2 starts, the scan controller 111 turns off the switch of the Scan line 1, and turns on the switch of the Scan line 2, and thereby controls the LEDs corresponding to the Scan line 2 to emit light. During the second section T2, the remaining scan lines, Scan line 1, Scan line 3 to Scan line n, excluding the Scan line 2 are also turned off. The scan controller 111 may make the entire cohort of pixels emit light during the relevant sub-frame section by sequentially switching from the Scan line 1 to the Scan line n in the same manner.

Referring to FIG. 5, the data lines of the plurality of scan lines, Scan line 1 to Scan line n, i.e., the LED lines, are allotted to the plurality of driver ICs 130-1 - 130-4. Each driver IC 130-1 - 130-4 applies an electric signal to the LED lines allotted to each driver IC 130-1 - 130-4, i.e., the data lines during a time section corresponding to one image frame. In case the entire set of LED lines are 64 lines, each of the four driver ICs 130-1 - 130-4 in total may be connected to 16 LED lines, and drive the pixels included in the corresponding LED lines.

Each driver IC 130-1 - 130-4 is configured to adjust the brightness of each of the pixels connected to each driver IC 130-1 - 130-4 within a scan group, by adjusting the sizes of currents introduced into each LED line or the sizes of voltages applied to the nodes connected to each LED line according to a control signal of the processor 150. For adjusting the brightness of each pixel, the processor 150 may provide PWM signals corresponding to each LED line to each driver IC 130-1 - 130-4.

The processor 150 may generate PWM signals for each line of each driver IC differently based on data representative of characteristic values for each line of the driver IC, and may thereby prevent generation of a noise due to a difference in the characteristics for each line. The aforementioned data may be generated by the manufacturing company of the display device 100 by directly identifying the characteristics of currents output for each line of a driver IC, but the data may also be provided from the manufacturing company of the driver IC or from other sources such as being obtained from experimental measurement.

The interface 120 is a component for connecting to an external device and performing communication. Specifically, the interface 120 may be implemented as at least one of interfaces in various forms that perform communication with various types of external devices through communication methods such as Wi-Fi, Bluetooth, Zigbee, a wired/wireless local area network "LAN", a wide area network "WAN", an Ethernet, the IEEE 1394, the Audio Engineering Society/European Broadcasting Union "AES/EBU", a high-definition multimedia interface "HDMI", a mobile high-definition link "MHL", a universal serial bus "USB", etc., and may also be implemented as various known interfaces other than the above.

The processor 150 is configured to receive inputs of data for characteristic values for each line of a driver IC from various kinds of external devices connected through the interface 120. The processor 150 is configured to store the input data in the memory 140.

The memory 140 is a component for storing various kinds of data and programs necessary for the operations of the modular display device 100. The memory 140 may be implemented as non-volatile memory such as static random access memory "S-RAM", dynamic random access memory "D-RAM", etc., and non-volatile memory such as flash memory, read only memory "ROM", erasable programmable read only memory "EPROM", electrically erasable programmable read only memory "EEPROM", etc., a hard disk drive "HDD", or a solid state drive "SSD", etc. The memory 140 may be accessed by the processor 150. The processor 150 is configured to perform operations such as reading/recording/correction/deletion/update, etc. of data for the memory 140.

The memory 140 is configured to store specification information of the driver ICs used for the plurality of display modules 110-1 - 110-n according to control by the processor 150. In the specification information, various kinds of information regarding the product names, the product numbers, the dates of manufacture, the information on the manufacturing company, the characteristic values for each line, etc. of the driver ICs may be included. In the characteristic values for each line, information on current values when the same voltage is applied, or a difference in the current values, etc. may be included.

The processor 150 is a component for controlling the operations of the display device 100. The processor 150 may be implemented as a digital signal processor "DSP") processing digital signals, a microprocessor, and a timing controller "TCON". However, the disclosure is not limited thereto, and the processor 150 may include one or more of a central processing unit "CPU", a micro controller unit "MCU", a micro processing unit "MPU", a controller, an application processor "AP" or a communication processor "CP", an ARM processor, and an artificial intelligence "AI" processor, or may be defined by the terms. Also, the processor 150 may be implemented as a system on chip "SoC" having a processing algorithm stored therein or large scale integration "LSI", or implemented in the form of a field programmable gate array "FPGA". The processor 150 may perform various functions by executing computer executable instructions stored in the memory 140.

The processor 150 adjusts the sizes of electric signals that the driver ICs provide to the LED lines allotted to each of them by using the data for characteristic values for each line of the driver ICs 130-1 - 130-m among the information stored in the memory 140.

As an example, the processor 150 is configured to use data for current values output for each channel in a driver IC. As described above, a plurality of display modules 110-1 - 110-n are included inside one modular display device 100, and at least one driver IC 130-1 - 130-m is arranged for each display module 110-1 - 110-n. For the entire driver ICs 130-1 - 130-m, the same products of the same company are used, and thus the characteristics of electric signals of one or two LED lines in one driver IC may vary from those of other ambient LED lines. For example, in case 16 LED lines are allotted to one driver IC, the characteristics of signal lines connected to the 15th or 16th LED line may vary from those of the signal lines connected to the other LED lines. If such driver ICs 130-1 - 130-m are consecutively coupled in a group of a plurality of driver ICs and implement one modular display device 100, their LED lines may continuously be displayed to be big in the entire modular display device 100. Accordingly, noise, specifically noise in vertical lines that were not identified at the time of testing in each module unit at the manufacturing step can be identified after the driver ICs are coupled as the modular display device 100.

The processor 150 may normalize the characteristic values for each line of each driver IC 130-1 - 130-n in a predetermined range for removing the aforementioned noise.

Normalization means a processing process for mapping various measurement values to values within a range designated specifically and displaying the values. As an example, in a case of using current values among characteristic values for each channel, the processor 150 may identify information on the current values of each LED line among the characteristic values for each channel of the driver ICs 130-1 - 130-n, and calculate an average value of the current values. The processor 150 may normalize differences between the calculated average value and the current values of each LED line within a predetermined range.

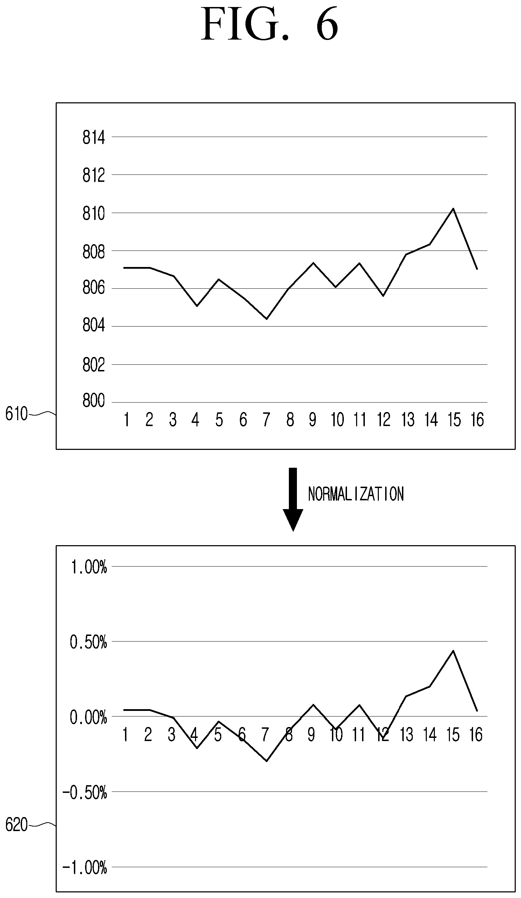

FIG. 6 is a diagram illustrating an example of a normalization method.

In FIG. 6, the horizontal axis illustrates the order of LED lines allotted to a driver IC, and the vertical axis illustrates the current values output to the LED lines. As indicated in FIG. 6, across illustrations 610 and 620, there are differences in the actual current values that are output for each LED line in the driver IC.

The processor 150 may calculate an average current value by summing up each current value, and then dividing them by the number of the entire LED lines. The processor 150 may calculate differences between the current values of each LED line and the average current value, and normalize the differences as values within a predetermined range. FIG. 6 illustrates a state wherein the differences were normalized within a range from -1% to +1%. In the example of FIG. 6, it can be figured out that the 15th line has the biggest difference compared to the average value.

The processor 150 may obtain gains for each line of the driver IC 130-1 - 130-m based on the normalized data. The gains for each line may include correction coefficients that can increase or decrease the sizes of electric signals provided to each LED line. The gains for each line may alternatively be referred to as correction data or correction values.

The processor 150 may adjust the sizes of electric signals for each LED line of the driver IC by using the gains for each line. Specifically, the processor 150 may generate PWM signals having different duties based on the gains for each line, and provide the PWM signals to the driver IC. Here, the duty means the time during a specific period, and more specifically, it may mean the time in an activated, or ("on", state in a PWM signal. A pulse width modulation "PWM" signal is a digital signal that is periodically repeated, and it means pulse width modulation. Specifically, in a digital signal wherein there are only 0 and 1, a value does not exist in the middle compared to an analog signal, and thus only on/off operations become possible when the digital signal is connected to an LED. Here, a PWM signal performs a role of adjusting on/off cycles by using pulse modulation of the PWM signal according to a duty value for adjusting the brightness of the LED.

The driver IC may apply an electric signal of an adjusted size for the LED lines allotted to the driver IC among the plurality of display modules based on the PWM signal.

The following table shows current values for each channel and normalization values for them, and digital gains obtained based on the normalization values based on a driver IC to which 16 LED lines are allotted.

**[Table 1]**

| Line | Current value of the driver IC | Normalization | | | Digital gain |
|---|---|---|---|---|---|
| | | A | B | C | |
| 1 | 807 | 1 | 0 | 0 | 16384 |
| 2 | 807 | 1 | 0 | 0 | 16384 |
| 3 | 806 | 0.99876084 3 | -0.001239157 | -0.00124 | 16403 |
| 4 | 803 | 0.99504337 1 | -0.004956629 | -0.00496 | 16464 |
| 5 | 807 | 1 | 0 | 0- | 16384 |
| 6 | 804 | 0.99628252 8 | -0.003717472 | -0.00372 | 16443 |
| 7 | 807 | 1 | 0 | 0 | 16384 |
| 8 | 806 | 0.99876084 3 | -0.001239157 | -0.00124 | 16403 |
| 9 | 807 | 1 | 0 | 0 | 16384 |
| 10 | 806 | 0.99876084 3 | -0.001239157 | -0.00124 | 16403 |
| 11 | 807 | 1 | 0 | 0 | 16384 |
| 12 | 808 | 1.00123915 7 | 0.001239157 | 0.00124 | 16362 |
| 13 | 809 | 1.00247831 5 | 0.002478315 | 0.00248 | 16342 |
| 14 | 810 | 1.00371747 2 | 0.003717472 | 0.00372 | 16322 |
| 15 | 811 | 1.00495662 9 | 0.004956629 | 0.00496 | 16301 |
| 16 | 807 | 1 | 0 | 0 | 16384 |

Referring to the Table 1, it can be figured out that the characteristics of the current values vary in diverse ways for the 16 LED lines in total. When the average value of each current value is calculated, it becomes 807. The processor 150 may calculate differences between the average value and each current value. In the Table 1, the A column indicates the normalization values for each current value when the average value is designated as the reference 1, the B column indicates the normalization values for the differences between each current value and the average value, and the C column indicates data wherein the data of the B column is indicated as much as to five decimal places. The digital gain column indicates the digital gains that were calculated for each LED line based on the normalized values. In the Table 1, the digital gain column indicates digital gains converted to 15bits.

When the digital gains are converted to digital data of 15bits, they may be expressed as various values within a range until 32768 which corresponds to 2^15. For example, the integer data expressed as 15bits may indicate values from -32768 to 32768.

Referring to the Table 1, the processor 150 may obtain correction data of 16384 if a case wherein the current value of the driver IC is 807 is set as the reference 1, and this is converted to a digital gain value of 15bits. In the cases of the third and fourth lines wherein the current values of the driver IC are smaller than 807, a screen that is darker than in the case of a line wherein the current value is 807 is displayed, and digital gains of 16403, 16464 which are bigger than 16384 may be calculated for displaying a bright screen.

In contrast, in the cases of the channels 12 and 13 wherein the current values of the driver IC are bigger than 807, a screen that is brighter than in the case of a channel wherein the current value is 807 is displayed, and digital gains of 16362, 16342 which are smaller than 16384 are calculated for displaying a dark screen.

The processor 150 removes noise due to current deviations for each line inside the display module 110 by using the calculated gains for each line.

As an example, the processor 150 removes noises in a vertical line form by executing a vertical noise reduction "VNR" function by using the calculated digital gains. Specifically, the processor 150 may adjust the sizes of currents applied to the plurality of LED lines by executing the VNR function by using the digital gains.

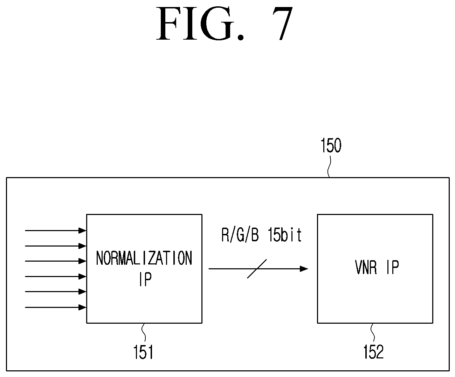

FIG. 7 illustrates an example of the configuration of the processor 150 for removing noise.

According to FIG. 7, the processor 150 includes a normalization IP 151 and a VNR IP 152. Here, "IP" refers to Intellectual Property and IP blocks or IP cores are function blocks that was designed to perform a specific function. The normalization IP 151 and the VNR IP 152 may respectively be implemented as a soft IP, a firm IP, a hard IP, etc.

The normalization IP 151 receives inputs of characteristic values for each line, and raw data for each of the R, G, B channels stored in the memory 140, and performs normalization. As the method for normalization was explained in the aforementioned part, overlapping explanation will be omitted. The gains for each line calculated by the normalization IP 151 are input into the VNR IP 152.

The VNR IP 152 is an IP for performing a post correction task, provided as, or at a FPGA of the processor 150. The VNR IP 152 may operate to compensate lines that seem brighter or darker than the ambient lines by multiplying each of the R, G, B LED lines with the digital gains.

As described above, the processor 150 may be implemented in various types. As an example, the processor 150 may be implemented as a timing controller. The timing controller may be mounted on the cabinet or the display device wherein the display modules are coupled one by one, and depending on embodiments, the timing controller may be mounted on the base plate and control the operations of the driver ICs mounted on the entire display modules.

In the case of being implemented as a timing controller, the processor 150 may include a FPGA, an application specific integrated circuit "ASIC", a PWM controller, etc. The PWM controller may generate PWM control signals having different duties according to control by the VNR IP 152, and provide the signals to each driver IC. As a result, each driver IC may provide electric signals of different sizes to each LED line based on the PWM control signals.

The processor 150 may be implemented as a separate component from the timing controller. In this case, the processor 150 may provide at least some of data such as the characteristic value data input through the interface 120, the normalized data, the gains for each line, etc. to the timing controller. For example, if the characteristic value data input through the interface 120 is provided to the timing controller according to control by the processor 150, the timing controller may calculate gains for each line as in the aforementioned operation of the processor 150. As another example, the processor 150 may provide values normalized based on the input data, or gains for each line calculated based on the normalized values to the timing controller.

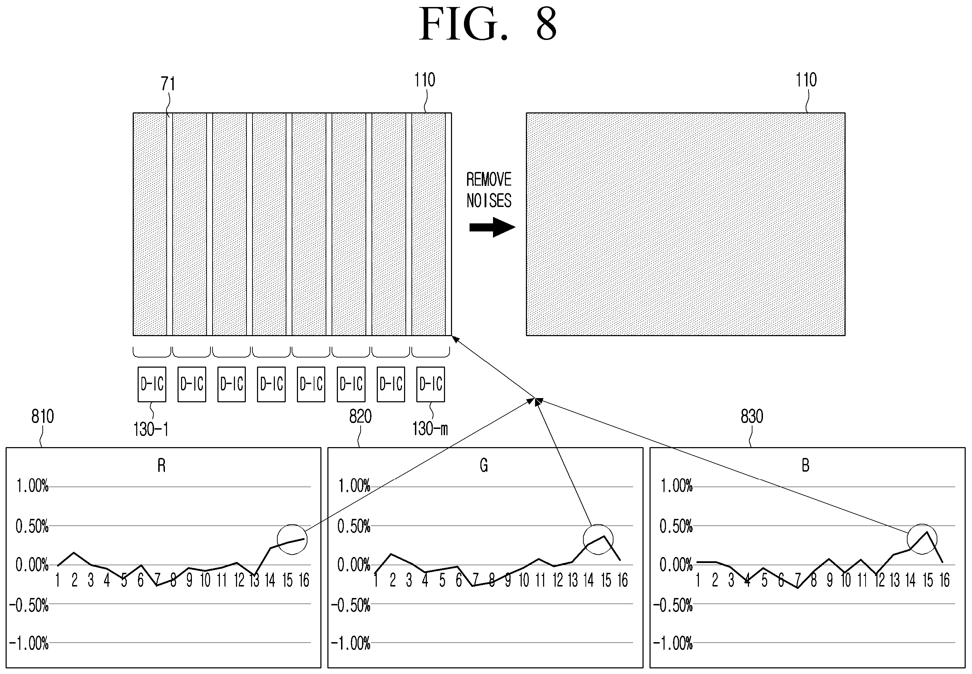

FIG. 8 is a diagram for illustrating a method of removing a noise in a vertical line form.

As illustrated in FIG. 8, it can be understood that current deviations are big in some lines, e.g., the 15th line, based on the characteristic values for each line 810, 820, 830 of the plurality of driver ICs 130-1 - 130-m that are in charge of the R, G, B channels. Due to this, noise 71 in a vertical line form may repeatedly be displayed on the screen of the display module 110.

As explained in the above description of example embodiments, the processor 150 may calculate digital gains for each of the R, G, B channels, and adjusts the sizes of electric signals for each line of each driver IC by applying the digital gains. Each driver IC provides the electric signals of the adjusted sizes to each LED line. As a result, as illustrated in FIG. 8, the noise 71 in a vertical line form may be removed.

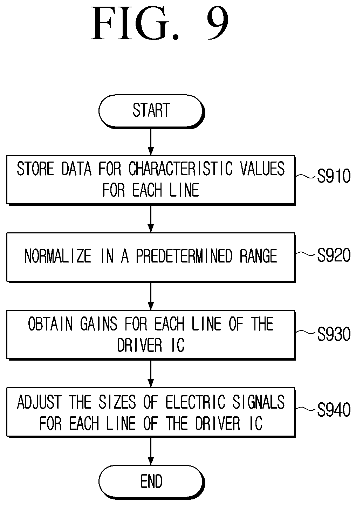

FIG. 9 is a flow chart for illustrating a method of removing noises of a modular display device according to the disclosure.

The modular display device includes a plurality of display modules as described in FIG. 1.

Referring to FIG. 9, the modular display device receives an input of data for characteristic values for each line of at least one driver IC arranged on each of the plurality of display modules, and stores the data in operation S910. The modular display device normalizes the characteristic values for each line in a predetermined range in operation S920.

The modular display device obtains gains for each line of the plurality of driver ICs based on the normalized data in operation S930, and adjusts the sizes of electric signals provided from the plurality of driver ICs to each LED line by using the gains for each line in operation S940.

As explained above, the normalization task may be performed based on an average value of the characteristic values of the plurality of LED lines allotted to each of the plurality of driver ICs. As the specific normalization method, the method for obtaining gains for each line, and the method for adjusting the sizes of electric signals were explained in detail in the aforementioned various embodiments, overlapping explanation will be omitted.

In the past, a noise phenomenon due to a current deviation for each channel of a driver IC was resolved by a person by identifying directly with the naked eye and adjusting the digital gains of the channel. However, according to the various embodiments of the disclosure, a noise problem can be resolved more precisely and efficiently even if a person does not identify it directly with the naked eye.

The aforementioned various embodiments can be applied to a product solely as individual components, units or systems , and/or at least some of the contents of the embodiments may be implemented in combination with other embodiments of the disclosure.

The aforementioned various embodiments may be implemented as software including instructions stored in machine-readable storage media, which can be read by machines, e.g.: computers. The machines refer to devices that call instructions stored in a storage medium, and can operate according to the called instructions, and the devices may include an electronic device according to the aforementioned embodiments, e.g.: the modular display device 100. In case an instruction is executed by a processor, the processor may perform a function corresponding to the instruction by itself, or by using other components under its control. An instruction may include a code that is generated or executed by a compiler or an interpreter. A storage medium that is readable by machines may be provided in the form of a computer-readable storage medium. Here, the term 'non-transitory' only means that a storage medium does not include signals, and is tangible, but does not indicate whether data is stored in the storage medium semi-permanently or temporarily.

Also, according to an embodiment of the disclosure, a method according to the aforementioned embodiments may be provided by, on or in a computer program product.

Specifically, a non-transitory computer-readable storage medium or a computer program product storing computer instructions that make operations including the steps of receiving inputs of current values for each line of a plurality of driver ICs arranged on each of the plurality of display modules, normalizing the characteristic values or the current values for each of the lines in a predetermined range, obtaining gains for each of the lines of the plurality of driver ICs based on the normalized data, and adjusting the sizes of electric signals for each of the lines of the plurality of driver ICs by using the gains for each of the lines performed may be provided.

A computer program product can be distributed in the form of a storage medium that is readable by machines, e.g.: compact disc read only memory "CD-ROM", or distributed on-line through an application store, e.g.: Play Store^{™}. In the case of on-line distribution, at least a portion of a computer program product may be stored in a storage medium such as the server of the manufacturer, the server of the application store, and the memory of the relay server at least temporarily, or may be generated temporarily.

Also, computer instructions or programs for performing the method for removing noises or the method for controlling a modular display device according to the aforementioned embodiments may be stored in a non-transitory computer-readable medium. Computer instructions stored in such a non-transitory computer-readable medium make the processing operations at machines according to the aforementioned embodiments performed by a specific machine, when the instructions are executed by the processor of the specific machine. A non-transitory computer-readable medium refers to a medium that stores data semi-permanently, and is readable by machines, but not a medium that stores data for a short moment such as a register, cache, memory, etc. As specific examples of a non-transitory computer-readable medium, there may be a CD, a DVD, a hard disk, a blue-ray disk, a USB, a memory card, ROM and the like.

In addition, while preferred embodiments of the disclosure have been shown and described, the disclosure is not limited to the aforementioned specific embodiments, and it is apparent that various modifications may be made by those having ordinary skill in the technical field to which the disclosure belongs, without departing from the appended claims.

## Claims

1. A modular display device comprising:
a plurality of display modules;
an interface;
at least one driver IC arranged on each of the plurality of display modules;
at least one memory storing one or more instructions; and
one or more processors configured to execute the one or more instructions;
wherein the one or more instructions, when individually and/or collectively executed by the one or more processors, are configured to:
based on data for characteristic values for each line of the driver IC being input through the interface, store the data in the memory, and
normalize the characteristic values for each of the lines of the at least one driver IC in a predetermined range,
obtain gains for each of the lines of the at least one driver IC based on the normalized data, and
adjust the sizes of electric signals for each of the lines of the at least one driver IC by using the gains for each of the lines, and wherein
the at least one driver IC is configured to apply the electric signals of the adjusted sizes to LED lines of each of the plurality of display modules.

2. The display device of claim 1,
wherein the one or more instructions, when individually and/or collectively executed by the one or more processors, are configured to:
calculate an average value of current values among the characteristic values of the plurality of lines allotted to the at least one driver IC, and
normalize based on the calculated average value.

3. The display device of claim 2,
wherein the one or more instructions, when individually and/or collectively executed by the one or more processors, are configured to:
normalize differences between the average value and the current values of the plurality of lines within the predetermined range.

4. The display device of claim 3,
wherein the gains for each of the lines are digital gains determined based on the normalized data.

5. The display device of claim 4,
wherein the gains are digital gains converted to 15bits, and
wherein the one or more instructions, when individually and/or collectively executed by the one or more processors, are configured to:
execute a vertical noise reduction, "VNR", function by using the digital gains converted to 15bits.

6. The display device of claim 4,
wherein the one or more instructions, when individually and/or collectively executed by the one or more processors, are configured to:
determine the digital gains for each of the plurality of lines based on the normalized data, and execute a VNR function by using the determined digital gains, and thereby adjust the sizes of currents applied to the plurality of lines.

7. The display device of claim 6,
wherein the one or more instructions, when individually and/or collectively executed by the one or more processors, are configured to:
compensate the plurality of lines by using the digital gains for each of R, G, B LED lines through the VNR function.

8. The display device of claim 7, further comprising:
a cabinet for supporting the plurality of display modules,
wherein the one or more processors are a timing controller that is mounted on the cabinet and controls each driver IC arranged on the plurality of display modules.

9. The display device of claim 8,
wherein the timing controller is configured to:
output PWM control signals having different duties to each of the driver ICs based on the gains.

10. A method for removing noise in a modular display device comprising a plurality of display modules, the method comprising:
based on data for characteristic values for each line of at least one driver IC arranged on each of the plurality of display modules being input, storing the data;
normalizing the characteristic values for each of the lines in a predetermined range;
obtaining gains for each of the lines of the driver IC based on the normalized data;
adjusting the sizes of electric signals for each of the lines of the driver IC by using the gains for each of the lines; and
applying the electric signals of the adjusted sizes to LED lines of each of the plurality of display modules by the driver IC.

11. The method of claim 10,
wherein the normalizing further comprises:
calculating an average value of current values among the characteristic values of the plurality of lines allotted to the driver IC; and
normalizing based on the calculated average value.

12. The method of claim 11,
wherein the normalizing further comprises:
normalizing differences between the average value and the current values of the plurality of lines within the predetermined range.

13. The method of claim 12,
wherein the gains for each of the lines are digital gains converted to 15bits based on the normalized data, and comprising:
executing a VNR function using the digital gains converted to 15bits.

14. The method of claim 13,
wherein the adjusting the sizes of the currents for each of the lines of the driver IC further comprises:
obtaining digital gains for the plurality of lines based on the normalized data; and
executing a VNR function based on the digital gains, and thereby adjusting the sizes of currents applied to the plurality of lines.

15. A non-transitory computer-readable storage medium storing computer instructions that, when executed by a processor of a modular display device including a plurality of display modules, cause the modular display device perform operations,
wherein the operations comprise:
based on data for characteristic values for each line of at least one driver IC arranged on each of the plurality of display modules being input, storing the data;
normalizing the characteristic values for each of the lines in a predetermined range;
obtaining gains for each of the lines of the driver IC based on the normalized data;
adjusting the sizes of electric signals for each of the lines of the driver IC by using the gains for each of the lines; and
applying the electric signals of the adjusted sizes to LED lines of each of the plurality of display modules by the driver IC.
